(19) **Europäisches Patentamt**
**European Patent Office**
**Office européen des brevets**

(11) **EP 4 714 614 A1**

(12) **EUROPEAN PATENT APPLICATION**

(43) Date of publication:
**25.03.2026 Bulletin 2026/13**

(51) International Patent Classification (IPC):
***B25J 9/16*** *(2006.01)*

(21) Application number: **24201330.8**

(52) Cooperative Patent Classification (CPC):
**B25J 9/163;** B25J 9/161; B25J 9/1653

(22) Date of filing: **19.09.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Rozo, Leonel**
**71032 Boeblingen (DE)**
• **Beik-Mohammadi, Hadi**
**70190 Stuttgart (DE)**

Remarks:
Amended claims in accordance with Rule 137(2)
EPC.

(54) **DEVICE AND METHOD FOR CONTROLLING A ROBOT DEVICE**

(57) According to various embodiments, a method for controlling a robot device is described, comprising providing demonstrations for movements of the robot device, wherein each demonstration demonstrates dynamics of the robot device by indicating a sequence of states of the robot device in an ambient space, encoding states of the robot device which the robot device traverses in the demonstrations to encoded states in a latent space by an encoding function which maps states from the ambient space to the latent space, determining a vector field in the latent space representing the demonstrated dynamics, generating a reshaped vector field by reshaping the vector field in the latent space, generating a vector field in the ambient space by mapping the reshaped vector field to ambient space according to the decoding function and controlling the robot device to follow the generated vector field in ambient space.

Fig. 3

**EP 4 714 614 A1**

**Description**

The present disclosure relates to devices and methods for controlling a robot device.

To ensure the safety of fully autonomous robots, stability guarantees are crucial in preventing undesirable and potentially harmful actions. Learning dynamic skills from demonstrations provides an efficient method to model highly dynamic motions from a few examples. However, stability guarantees are hard to provide in dynamical systems that are learned from demonstrations, especially when the learned dynamics are governed by neural networks. Further, while stability of dynamical systems guarantees that the robot can successfully reach targets in the face of external perturbations or changes in the environment, it is not the sole factor ensuring a dynamical system's successful and safe completion of a task; obstacle avoidance is also necessary. In practice, integrating obstacle avoidance into stable dynamical systems presents a challenge, as it requires simultaneously avoiding obstacles while preserving the system's stability properties. Similarly, to ensure robust control, unknown regions (i.e. states that are far away from states that were traversed in the demonstrations) should be avoided.

Therefore, approaches are desirable which allow to efficiently learn dynamics for different tasks and skills such that the robot can autonomously handle different control scenarios while at the same time being able to avoid obstacles and unknown regions.

According to various embodiments, a method for controlling a robot device is provided, comprising:

- providing demonstrations for movements of the robot device, wherein each demonstration demonstrates dynamics of the robot device by indicating a sequence of states of the robot device in an ambient space
- encoding states of the robot device which the robot device traverses in the demonstrations to encoded states in a latent space by an encoding function which maps states from the ambient space to the latent space
- determining a vector field in the latent space representing the demonstrated dynamics
- generating a reshaped vector field by reshaping the vector field in the latent space by

  ○ determining a volume function in the latent space which specifies the volume according to a pullback metric according to a decoding function inverse to the encoding function of a predetermined metric in the ambient space and
  ○ locally reshaping or modifying the vector field in regions where the volume of the pullback metric increases

- generating a vector field in the ambient space by mapping the reshaped vector field to ambient space according to the decoding function and
- controlling the robot device to follow the generated vector field in ambient space.

The method describes above allows controlling a robot device in a reliable manner while avoiding obstacles and simplifying and enhancing adaptability in dynamic environments. According to various embodiments,

- it enhances safety and resilience to environmental changes by designating regions outside a data manifold in the latent space as unsafe, thus ensuring these uncertain areas are effectively avoided
- by operating in a low-dimensional latent space it enhances the performance of obstacle avoidance, which can be computationally expensive otherwise
- it is compatible with any implicit representation of obstacles, regardless of their geometrical properties, including non-convex shapes
- it is computationally effective and capable of running in real-time.

In the following, various examples are given.

Example 1 is a method for controlling a robot device as described above.

Example 2 is the method of example 1, comprising determining the metric in the ambient space such that distances decrease when approaching an obstacle.

This ensures that the reshaped vector field points away from obstacles because when distances decrease when approaching the obstacle, the volume in latent space according to the pullback metric increases when approaching in obstacle.

Example 3 is the method of example 1 or 2, wherein the decoding function includes an uncertainty term increasing when leaving a region of the latent space containing the encoded states.

This ensures that the reshaped vector field points away from unknown regions, i.e. regions of the ambient space not covered by the demonstrations, i.e. regions not containing any of the encoded states and thus regions for which the demonstrations do not give information about the robot device (101) dynamics.

Example 4 is the method of any one of examples 1 to 3, comprising attenuating the vector field in directions perpendicular to directions of increasing volume at least in some parts of the latent space.

This further directs the robots away from the regions of increasing volume in latent space, i.e. away from objects and/or unknown regions.

Example 5 is the method of any one of examples 1 to 4, comprising attenuating the vector field by determining the gradient of a scalar vector field, wherein the scalar field is, for a given scaling factor, at each point of the latent space given by the inverse of the volume according to the pullback metric at the point times the scaling factor and attenuating vector field in directions of the gradient of the scalar field.

This allows attenuating the vector field in a suitable manner with low computational effort.

Example 6 is the method of any one of examples 1 to 5, comprising amplifying the vector field in directions of decreasing volume according to an amplification factor which monotonically decreases with increasing distance to an obstacle.

This ensures that with high distance from the obstacles (e.g. the amplification factor may go to zero with increasing distance from the obstacles) the vector field stays unchanged and thus reflects the correct dynamics as demonstrated by the demonstrations.

Example 7 is the method of any one of examples 1 to 6, wherein the encoding function is an encoder of a variational autoencoder and the decoding function is a decoder of the variational autoencoder.

Using a variational autoencoder (which is accordingly trained) provides an efficient way to encode states and thus to model dynamics in a latent space (which has lower dimension that the ambient space). The uncertainty mentioned above for example corresponds to a randomness of the decoder of the variational autoencoder.

Example 8 is the method of any one of examples 1 to 7, comprising determining the vector field in the latent space representing the demonstrated dynamics by learning the Jacobian of a function representing the demonstrated dynamics by training a neural network to output, in response to input of an encoded state, a representation of a semi-definite matrix, which, when regularized to give a negative definite matrix approximates the Jacobian of the function representing the demonstrated dynamics and, for determining a velocity vector from the vector field at an encoded state, integrating the Jacobian along a line from a reference point in the latent space to the encoded state

This ensures stability (contraction) while still avoiding unsafe regions and obstacles.

Example 9 is a controller, configured to perform a method of any one of examples 1 to 8.

Example 10 is a computer program comprising instructions which, when executed by a computer, makes the computer perform a method according to any one of examples 1 to 8.

Example 11 is a computer-readable medium comprising instructions which, when executed by a computer, makes the computer perform a method according to any one of examples 1 to 8.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a robot.

Figure 2 illustrates how the elements of a matrix used for reshaping a vector field behave as a function of the distance from an obstacle.

Figure 3 shows a flow diagram illustrating a method for controlling a robot device according to an embodiment.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

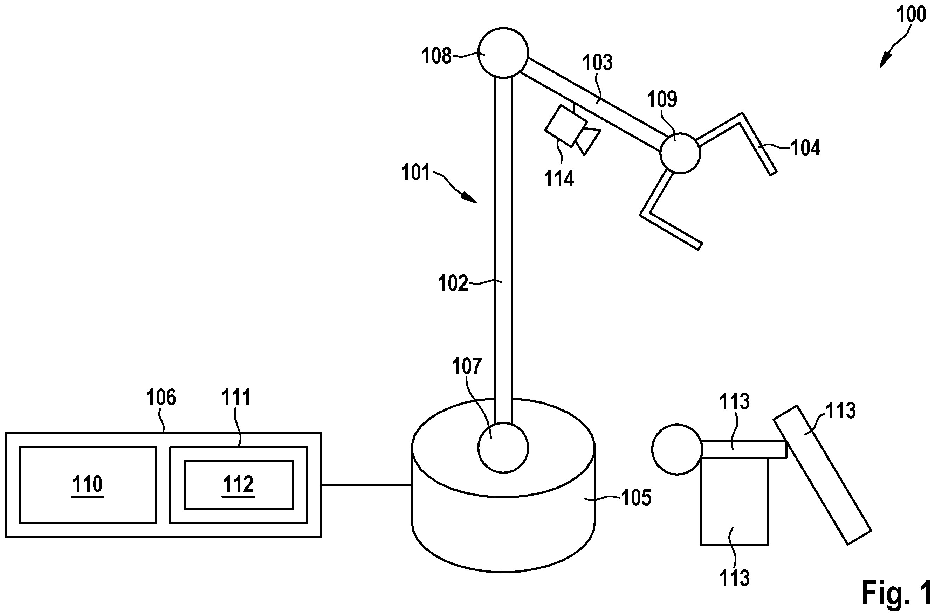

Figure 1 shows a robot 100.

The robot 100 includes a robot arm 101, for example an industrial robot arm for handling or assembling a work piece (or one or more other objects 113). The robot arm 101 includes manipulators 102, 103, 104 and a base (or support) 105 by which the manipulators 102, 103, 104 are supported. The term "manipulator" refers to the movable members of the robot arm 101, the actuation of which enables physical interaction with the environment, e.g. to carry out a task. For control, the robot 100 includes a (robot) controller 106 configured to implement the interaction with the environment according to a control program. The last member 104 (furthest from the support 105) of the manipulators 102, 103, 104 is also referred to as the end-effector 104 and includes a grasping tool (which may also be a suction gripper).

The other manipulators 102, 103 (closer to the support 105) may form a positioning device such that, together with the end-effector 104, the robot arm 101 with the end-effector 104 at its end is provided. The robot arm 101 is a mechanical arm that can provide similar functions as a human arm.

The robot arm 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 includes one or more processors 110 and a memory 111 storing code and data based on which the processor 110 controls the robot arm 101. According to various embodiments, the controller 106 controls the robot arm 101 on the basis of a machine-learning model (e.g. including one or more neural networks) 112 stored in the memory 111.

One option to control the robot arm 101 is that the controller 106 learns, by means of the machine-learning model 112, dynamics of the robot arm from demonstrations (typically from a human user) how to perform a certain task (like reaching for an object). This means that it is demonstrated to the controller 106 (e.g. by moving the robot arm manually by a human user) in what direction and with which speed the robot arm should move when being in a certain state (e.g. in particular end-effector position). When the controller 106 has learned these dynamics (e.g. the machine-learning model 112 is trained to output, for a state, a velocity vector), the controller 106 can simply operate as velocity controller and follow the dynamics (i.e. follow a vector field representing the dynamics) to perform the task.

Learning robot dynamics from demonstrations has shown to be an efficient and intuitive approach for encoding highly dynamic motions into a robot's repertoire. Unfortunately, these learning-based approaches often struggle to ensure stability as they rely on the respective machine learning model to extrapolate in a controlled manner. Models based on neural networks, in particular, generally struggle with providing global stability guarantees.

The simplest form of stability, known as Lyapunov stability, ensures that all motions converge to a fixed point (the system's attractor). Many tasks, however, require tracking a specific trajectory, and therefore Lyapunov stability becomes an insufficient guarantee. A more promising notion of stability is provided by contraction theory, which ensures that the robot dynamics converge to a nominal motion. Unfortunately, the mathematical requirements of a contractive system are difficult to ensure in popular neural network architectures.

In view of the above, according to various embodiments, an approach for learning contractive dynamics using neural networks is provided. In particular, according to various embodiments, an approach referred to as neural contractive dynamical system (NCDS) is provided which is a neural architecture for modelling dynamics that is guaranteed to be contractive. This avoids the need to impose hard or soft contraction constraints on the model optimization, and it does not require labelled contraction metric samples for training. NCDS is a flexible, yet stable, framework for learning low-dimensional dynamics. Higher-dimensional dynamics, however, remain difficult. Therefore, according to various embodiments, an approach to scale NCDS to high-dimensional dynamical systems via a variational autoencoder with an injective decoder is provided, which allows learning system dynamics in a low-dimensional latent space while ensuring that the decoded dynamics remain contractive. Further, according to various embodiments, an approach is provided to modulate the final dynamics to avoid obstacles while retaining the contractive stability guarantee.

For the following let $\dot{x} = f(x)$ be a dynamical system (e.g. describing the desired autonomous behaviour of a robot arm), where $x \in \mathbb{R}^D$ is the state variable and $f : \mathbb{R}^D \rightarrow \mathbb{R}^D$ is an, at least, $C^1$ function. Intuitively speaking, contraction stability ensures that the distance between any two neighbouring trajectories incrementally decrease over time regardless of initial conditions $x(0)$, $\dot{x}(0)$ and temporary perturbations. The system stability can, thus, be analysed differentially, i.e. it can be determined whether two nearby trajectories both fulfilling $\dot{x} = f(x)$ converge to one another. Specifically, contraction theory defines a measure of distance between neighbouring trajectories, known as the contraction metric, which decreases exponentially over time.

Formally, an autonomous dynamical system yields the differential relation $\delta\dot{x} = J(x)\delta x$, where $J(x) = \partial f / \partial x$ is the system Jacobian and $\delta x$ is a virtual displacement (i.e., an infinitesimal spatial displacement between the nearby trajectories at a fixed time). The rate of change of the corresponding infinitesimal squared distance $\delta x^{\mathsf{T}}\delta x$ is then

$$\frac{\mathrm{d}}{\mathrm{d}t}(\delta x^\top \delta x) = 2\delta x^\top \delta \dot{x} = 2\delta x^\top J(x)\delta x. \tag{1}$$

It follows that if the symmetric part of the Jacobian $J(x)$ is negative definite, then the infinitesimal squared distance between neighbouring trajectories decreases over time. This can be formalized as the following definition of contraction stability: an autonomous dynamical system $\dot{x} = f(x)$ exhibits a contractive behaviour if its Jacobian $J(x) = \partial f/\partial x$ is uniformly negative definite, or equivalently if its symmetric part is negative definite. This means that there exists a constant $\tau > 0$ such that $\delta x^\top \delta x$ converges to zero exponentially at rate $2^\tau$. This can be summarized as

$$\exists \tau > 0 \quad s.t. \quad \forall x, \quad \frac{1}{2}\left(J(x) + J(x)^\top\right) \prec -\tau I \prec 0 \tag{2}$$

The above analysis can be generalized to account for a more general notion of distance of the form $\delta_x^\top M(x)\delta x$, where $M(x)$ is a positive-definite matrix known as the contraction metric.

According to various embodiments, in view of equation (2), $f : \mathbb{R}^D \to \mathbb{R}^D$ is represented by a neural network (e.g. the machine learning model 112) in a manner that it is guaranteed that the symmetric part of the Jacobian is negative definite. It should be noted that it is not apparent how to impose a negative definiteness constraint on a network's Jacobian without compromising its expres-siveness. For this, the Jacobian of $f : \mathbb{R}^D \to \mathbb{R}^D$ is represented by a neural network (denoted as "Jacobian" neural network in the following), i.e. the Jacobian neural network gives a prediction $\hat{J}_f$ in response to a state input. The Jacobian neural network is designed to produce matrix-valued negative definite outputs. Specifically, its output is generated as

$$\hat{J}_f(x) = -\left(J_\theta(x)^\top J_\theta(x) + \epsilon \mathbb{I}_D\right) \tag{3}$$

where $J_\theta : \mathbb{R}^D \to \mathbb{R}^{D \times D}$ is a neural network parameterized by $\theta$, $\epsilon \in \mathbb{R}^+$ is a small positive constant, and $\mathbb{I}_D$ is an identity matrix of size $D$. Intuitively, this can be interpreted as $J_\theta$ being (approximately) the square root of $\hat{J}_f$. Clearly, $\hat{J}_f$ is negative definite as its largest eigenvalue is bounded from above by $-\epsilon$.

The parameter $\epsilon$ is set to be a small constant (e.g. 10-4). It may be experimentally chosen. It has to be small in order to not interfere with the reconstruction since it does not only affect the non-negative eigenvalues but all of them, so larger values may negatively affect the reconstruction accuracy.

The function $f : \mathbb{R}^D \to \mathbb{R}^D$ can now be produced (or approximated) by integrating $\hat{J}_f$. So, $f : \mathbb{R}^D \to \mathbb{R}^D$ has the Jacobian $\hat{J}_f$ which is implicitly parametrized by $\theta$: by the fundamental theorem of calculus for line integrals the function can be constructed by a line integral of the form

$$\dot{x} = f(x) = \dot{x}_0 + \int_0^1 \hat{J}_f\left(c(x, t, x_0)\right)\dot{c}(x, t, x_0)\mathrm{d}t, \tag{4}$$

with

$$c(x, t, x_0) = (1 - t)x_0 + tx \text{ and } \dot{c}(t, x_0, x) = x - x_0 \tag{5}$$

where $x_0$ and $\dot{x}_0 = f(x_0)$ represent the initial conditions of the state variable and its first-order time derivative, respectively. The input point $x_0$ can be chosen arbitrarily (e.g. as the mean of the training data or learned), while the corresponding function value $\dot{x}_0$ has to be trained alongside the parameters $\theta$. This means that given a set of demonstrations denoted as $\mathcal{D} = \{x_i, \dot{x}_i\}$, a set of parameters $\theta$ along with the initial conditions $x_0$ and $\dot{x}_0$ are learned such that the integration in equation (4) enables accurate reconstruction of the velocities $\dot{\boldsymbol{x}}_i$ given the state $\boldsymbol{x}_i$.

The integral in equation (4) is similar to a neural ordinary differential equation, with the difference that it represents a second-order ordinary differential equation. Specifically, the outcome of this integral pertains to the velocity at state $\boldsymbol{x}$, rather than the ensuring state. It can thus be seen as a second-order neural ordinary equation and be solved using off-the-shelf numerical integrators. The resulting function $f$ has a uniformly negative definite Jacobian for any choice of $\theta$ and is consequently contractive by construction. This way of determining $f$ is denoted as neural contractive dynamical system (NCDS). It is highly flexible even though it guarantees contractive stability. Further, it allows

- using any smooth neural network $\boldsymbol{J}_\theta$ as the base model, and
- being trained using ordinary unconstrained optimization (so the parameters $\theta$ along with the initial conditions $\boldsymbol{x}_0$ and $\dot{\boldsymbol{x}}_0$ may be trained by fitting the model to the demonstrations, e.g. by gradient descent of a certain loss.

In the above description of the neural contractive dynamical system, the neural network $\boldsymbol{J}_\theta$ operates on the state space $\boldsymbol{x} \in \mathbb{R}^D$, which may have a high number of dimensions. However, learning highly nonlinear contractive dynamical systems in high-dimensional spaces is difficult. These systems may exhibit complex trajectories with intricate interactions and interdependencies among the system variables, making it challenging to capture their underlying dynamics.

To address this, data dimensionality may be reduced by working on a low-dimensional latent space, i.e. $\boldsymbol{J}_\theta$ then has inputs from the latent space as inputs. In other words, the NCDS is trained on a low-dimensional latent space. The main difficulty for this approach is that even if the latent dynamics are contractive, the associated high-dimensional dynamics are not necessarily contractive. In view of this, in the following, an approach for reducing data dimensionality (for the NCDS) is described which allows preserving contraction.

According to various embodiments, a variational autoencoder (VAE) is used. A VAE is a deep generative model. The main goal of deep generative models is to approximate a true underlying probability density $p(\boldsymbol{x})$ given a finite set of training data in an ambient space $\mathcal{X}$ by considering a lower-dimensional latent space $\mathcal{Z}$. In particular, the variational autoencoder (VAE) is a latent variable model, often specified through a prior and a likelihood,

$$p(\boldsymbol{z}) = \mathcal{N}\left(\boldsymbol{z} \mid \boldsymbol{0},\, \mathbb{I}_d\right) \qquad \boldsymbol{z} \in \mathcal{Z} \tag{6}$$

$$p_\phi(\boldsymbol{x}|\boldsymbol{z}) = \mathcal{N}\left(\boldsymbol{x} \mid \mu_\phi(\boldsymbol{z}),\, \mathbb{I}_D \sigma_\phi^2(\boldsymbol{z})\right), \qquad \boldsymbol{x} \in \mathcal{X} \tag{7}$$

Typically, the mean and the variance of the likelihood are parametrized using deep neural networks $\mu_\phi : \mathcal{Z} \to \mathcal{X}$ and $\sigma_\phi^2 : \mathcal{Z} \to \mathbb{R}_+^D$ with parameters $\phi$, and $\mathbb{I}_D$ and $\mathbb{I}_d$ being identity matrices of size $D$ and $d$, respectively. The corresponding density can be evaluated by the associated marginal likelihood (evidence) $p_\phi(\boldsymbol{x}) = \int_{\mathcal{Z}} p_\phi(\boldsymbol{x}|\boldsymbol{z}) p(\boldsymbol{z}) \mathrm{d}\boldsymbol{z}$, but this is generally intractable. Instead, a variational lower bound is maximized during model fitting

$$\mathcal{L}_{ELBO} = \mathbb{E}_{q_\xi(\boldsymbol{z}|\boldsymbol{x})}\left[\log(p_\phi(\boldsymbol{x}|\boldsymbol{z}))\right] - \mathrm{KL}\left(q_\xi(\boldsymbol{z}|\boldsymbol{x}) \| p(\boldsymbol{z})\right) \tag{8}$$

by leveraging a variational distribution $q_\xi(\boldsymbol{z}|\boldsymbol{x}) = \mathcal{N}\left(\boldsymbol{z} \mid \mu_\xi(\boldsymbol{x}), \mathbb{I}_d \sigma_\xi^2(\boldsymbol{x})\right)$ that approximates the true posterior distribution $p(\boldsymbol{z}|\boldsymbol{x})$, where $\mu_\xi : \mathcal{X} \to \mathcal{Z}$ and $\sigma_\xi : \mathcal{X} \to \mathbb{R}_+^d$ are deep neural networks with parameters $\xi$. The approximate posterior distribution $p_\xi(\boldsymbol{z}|\boldsymbol{x})$ is called inference or encoder distribution, while the generative distribution $p_\phi(\boldsymbol{x}|\boldsymbol{z})$ is called the generator or decoder. The latent variable $\boldsymbol{z} = \mu_\xi(\boldsymbol{x})$ is often interpreted as the low-dimensional representation of an observation $\boldsymbol{x}$.

According to various embodiments, a VAE is used to provide low-dimensional representations of individual points along observed trajectories in order to learn a latent contractive dynamical system.

A key limitation of the VAE is that it does not allow to evaluate the marginal likelihood so one needs to rely on a bound. When $\dim(\mathcal{X}) = \dim(\mathcal{Z})$, the change-of-variables theorem can be applied to evaluate the marginal likelihood exactly, giving rise to the model class known as normalizing flows. This requires the deterministic decoder to be a diffeomorphism, i.e. a smooth invertible function with a smooth inverse. In order to extend this to the case where $\dim(\mathcal{X}) > \dim(\mathcal{Z})$, according to various embodiments, an injective flow is used which implements a zero-padding operation on the latent variables alongside a diffeomorphic decoder, such that the resulting function is injective.

So, according to various embodiments, to reduce data dimensionality with a VAE while preserving contractivity of the contractive dynamical system when it is decoded into the data space, the fact that contraction is invariant under coordinate changes is used. This means that the transformation between the latent and data spaces may be generally achieved through a diffeomorphic mapping: given an autonomous contractive dynamical system $\dot{x} = f(x)$ and a diffeomorphism $\psi$ applied on the state $x \in \mathbb{R}^D$, the transformed system preserves contraction under the change of coordinates $y = \psi(x)$. Equivalently, contraction is also guaranteed under a differential coordinate change

$$\delta_y = \frac{\partial \psi}{\partial x} \delta_x .$$

Accordingly, according to various embodiments, a VAE with a diffeomorphic decoder $\mu : \mathcal{Z} \to \mathcal{X}$, i.e. a smooth bijective mapping between two smooth manifolds (namely z, and its image $\mu(\mathcal{Z})$) which preserves the topological properties of $\mathcal{Z}$, and whose inverse $\mu^{-1}$ is also smooth is trained.

Formally, an injective flow $\mu : \mathcal{Z} \to \mathcal{X}$ learns an injective mapping between a low-dimensional latent space Z and a higher-dimensional data space $\mathcal{X}$. Injectivity of the flow ensures that there are no singular points or self-intersections in the flow, which may compromise the stability of the system dynamics in the data space. In order to train $\mu$, an injective flow decoder is used which implements a zero-padding operation on the latent variables followed by a series of K invertible transformations $g_k$. This means that

$$\mu = g_K \circ \cdots \circ g_1 \circ \mathrm{Pad},$$

$$(9)$$

where $\mathrm{Pad}(z) = [z_1 \cdots z_d \; 0 \cdots 0]^T$ represents a d-dimensional vector z with additional D-d zeros. This decoder is a diffeomorphic mapping between $\mathcal{Z}$ and $\mu(\mathcal{Z}) \subset \mathcal{X}$, such that a decoded contractive dynamical system remains contractive (after decoding into the ambient space.).

Specifically, a latent data representation using a VAE is learned, where the decoder mean $\mu_\xi$ follows the architecture of equation (9). Experiments show that training stabilizes when the variational encoder takes the form

$$q_\xi(z|x) = \mathcal{N}(z \mid \mu_{\tilde{\xi}}^{-1}(x), \mathbb{I}_d \sigma_\xi^2(x)),$$ where $\mu_{\tilde{\xi}}^{-1}$ is the approximate inverse of $\mu_\xi$ given by

$$\mu_\phi = \mathrm{Unpad} \circ g_1^{-1} \circ \cdots \circ g_K^{-1},$$

$$(10)$$

where $\mathrm{Unpad} : \mathbb{R}^D \to \mathbb{R}^d$ removes the last D-d dimensions of its input as an approximation to the inverse of the zero-padding operation. It should be noted that an exact inverse is not required for equation (8) to be a lower bound on the model evidence.

It should further be noted that the state $x$ solely encodes the positional information of the system, disregarding the velocity $\dot{x}$. In order to decode latent velocity $\dot{z}$ into data space velocity $\dot{x}$, we the Jacobian matrix associated with the decoder mean function, denoted as $J_{\mu_\xi}(z)$, can be used.

This matrix encapsulates the partial derivatives of the decoder's output with respect to its inputs, thus enabling the decoding process according to

$$\dot{x} = J_{\mu_\xi}(z)\dot{z}$$

$$(11)$$

This allows learn a contractive dynamical system on the latent space $\mathcal{Z}$, where the contraction is guaranteed by employing the NCDS as described above (i.e. in particular equation (3)). The latent velocities $\dot{\boldsymbol{z}}$ (which may in training be simply estimated by numerical differentiation with respect to the latent state $\boldsymbol{z}$) given by such a contractive dynamical system can be mapped to the data space $\mathcal{X}$ using equation (11). The resulting dynamical system still guarantees contraction since, as explained above, diffeomorphisms preserve contractivity.

When state encoding using a VAE is used, the training comprises two stages: first, the VAE is trained using evidence lower bound (ELBO) loss. ELBO is combined of two terms, a reconstruction that maximizes the log likelihood therefore ensuring proper reconstructing of the input, and a regularization term that ensures that the latent codes are normally distributed. Once the VAE is trained access to the latent space is available and the dynamical system, i.e. the Jacobian network, can be trained. Second, the dynamical system is trained end to end by providing latent state and (latent) velocities of the demonstrations as the training data. The loss contains a reconstruction term that computes the difference between actual and approximated velocity in the latent space. This difference is then used as a loss and backpropagated thorough the integration and the Jacobian network. If state encoding using the VAE is not used, the first stage is omitted.

So, as described above, a machine learning model (e.g. a neural network) according to an NCDS can be trained to represent robot dynamics in a low dimensional latent space of a Variational Autoencoder (VAE) with the latent dynamics remaining contractive after decoding into the data space. For this, the fact that contraction is invariant under coordinate changes is leveraged. This means that the transformation between the latent and data spaces may be generally achieved through a diffeomorphic mapping. Therefore, according to various embodiments, the training includes training a VAE with an injective decoder $\mu$ which is a diffeomorphism between the latent space $\mathcal{Z}$ and its image $\mu(\mathcal{Z}) \subset \mathcal{X}$. Geometrically, $\mu$ spans a d-dimensional submanifold of $\mathcal{X}$ on which the dynamical system (whose dynamics are learned) operates.

Further, according to various embodiments, obstacle avoidance is implemented via matrix modulation. In real-world scenarios, obstacle avoidance is critical to achieving safe autonomous robots. Thus, the learned dynamical system should effectively handle previously unseen obstacles, without interfering with the overall contracting behaviour of the system. According to various embodiments, this is addressed by a contraction-preserving obstacle avoidance method, based on a dynamic modulation matrix G. This approach locally reshapes the learned vector field in the proximity of obstacles, while preserving contraction guarantees. To avoid obstacles effectively, it is imperative to know both the position and geometry of the obstacle. This makes obstacle avoidance on the VAE latent space particularly difficult as we need to map the obstacle location and geometry to the latent space $\mathcal{Z}$. Hence, according to various embodiments, the modulation matrix is directly applied to the data space $\mathcal{X}$ of the decoded dynamical system.

Formally, given the modulation matrix G, the data space vector field can be reshaped to dynamically avoid an obstacle as follows,

$$\dot{\boldsymbol{x}} = \boldsymbol{G}(\boldsymbol{x})\boldsymbol{J}_{\mu_\xi}(\boldsymbol{z})\dot{\boldsymbol{z}}, \text{ with } \boldsymbol{G}(\boldsymbol{x}) = \boldsymbol{E}(\boldsymbol{x})\boldsymbol{D}(\boldsymbol{x})\boldsymbol{E}(\boldsymbol{x})^{-1}, \qquad (12)$$

where $\boldsymbol{E}(\boldsymbol{x})$ and $\boldsymbol{D}(\boldsymbol{x})$ are the basis and diagonal eigenvalue matrices computed as

$$\boldsymbol{E}(\boldsymbol{x}) = [r(\boldsymbol{x})\, \mathbf{e}_1(\boldsymbol{x}) \ldots \mathbf{e}_{d-1}(\boldsymbol{x})]$$

and

$$\boldsymbol{D}(\boldsymbol{x}) = \mathrm{diag}(\lambda^r(\boldsymbol{x}), \lambda^e(\boldsymbol{x}), \ldots, \lambda^e(\boldsymbol{x})), \qquad (13)$$

where $r(\boldsymbol{x}) = \frac{\boldsymbol{x} - \boldsymbol{x}_r}{\|\boldsymbol{x} - \boldsymbol{x}_r\|}$ is a reference direction computed with respect to a reference point $\boldsymbol{x}_r$ on the obstacle and the tangent vectors $\mathbf{e}_i$ form an orthonormal basis to the gradient of a distance function $\Gamma(\boldsymbol{x})$.

The components of the matrix $\boldsymbol{D}(\boldsymbol{x})$ are defined as

$\lambda^r(\mathbf{x}) = 1 - \left(\frac{1}{\Gamma(\mathbf{x})}\right)^{\frac{1}{\rho}}$, $\lambda^e(\mathbf{x}) = 1 + \left(\frac{1}{\Gamma(\mathbf{x})}\right)^{\frac{1}{\rho}}$, where $\rho \in \mathbb{R}_+$ is a reactivity factor. It should be noted that the matrix $\boldsymbol{D}(\boldsymbol{x})$ modulates the dynamics along the directions of the basis defined by the set of vectors $\boldsymbol{r}(\boldsymbol{x})$ and $\boldsymbol{e}(\boldsymbol{x})$. The function $\Gamma(\cdot)$ monotonically increases w.r.t the distance from the obstacle's reference point $\boldsymbol{x}_r$, and it is, at least, a $C^1$ function. It can be shown that the modulated dynamical system $\dot{\boldsymbol{x}} = \boldsymbol{G}(\boldsymbol{x})\boldsymbol{J}_{\mu_\xi}(\boldsymbol{z})\dot{\boldsymbol{z}}$ still guarantees contractive stability.

For the obstacle avoidance according to equation (12), the position of the obstacle as well as the distance function $\Gamma(\cdot)$ are needed. According to various embodiments, a modulation matrix based on the induced Riemannian metrics is formulated. This allows direct obstacle avoidance within the latent space. The modulation matrix is calculated as a function of the induced Riemannian metric computed from the VAE's decoder. The induced Riemannian metric is explained in the following.

In differential geometry, Riemannian manifolds are referred to as curved d-dimensional continuous and differentiable surfaces characterized by a Riemannian metric. This metric is characterized by a family of smoothly varying positive-definite inner products acting on the tangent spaces of the manifold, which locally resembles the Euclidean space $\mathbb{R}^d$.

Let now be $h$ a mapping function (as for example given by the VAE decoder) to represent a manifold $\mathcal{M}$ immersed in the ambient space $\mathcal{X}$ defined as

$$\mathcal{M} = h(\mathcal{Z}) \text{ with } h : \mathcal{Z} \to \mathcal{X} \tag{14}$$

where $\mathcal{Z}$ and $\mathcal{X}$ are open subsets of Euclidean spaces with dim $\mathcal{Z}$ < dim $\mathcal{X}$.

An important operation on Riemannian manifolds is the computation of the length of a smooth curve $c : [0, 1] \to \mathcal{Z}$ defined as

$$\mathcal{L}_c = \int_0^1 \| \partial_t h(c(t)) \| \, \mathrm{d}t \tag{15}$$

This length can be reformulated using the chain rule as,

$$\mathcal{L}_c = \int_0^1 \sqrt{\dot{c}(t)^\mathsf{T} \boldsymbol{M}(c(t)) \dot{c}(t)} \, \mathrm{d}t \tag{16}$$

where $\boldsymbol{M}$ and $\dot{c}_t = \partial_t c_t$ are the Riemannian metric (i.e. the induced Riemannian metric, i.e. the Riemannian metric induced by the function $\boldsymbol{h}$ on the (e.g. latent) space $\mathcal{Z}$ ) and curve derivative, respectively. This (induced) Riemannian metric is given by

$$\boldsymbol{M}(\boldsymbol{z}) = \boldsymbol{J}_h(\boldsymbol{z})^\mathsf{T} \boldsymbol{J}_h(\boldsymbol{z}) \tag{17}.$$

Here, $\boldsymbol{J}_h(\boldsymbol{z})$ is the Jacobian of the mapping function $\boldsymbol{h}$. It should be noted that in the present use case, it is induced by the VAE decoder and can therefore be computed therefrom.

The induced Riemannian metric (also referred to as "pullback" (Riemannian) metric) can be used to measure local distances in $\mathcal{Z}$. The shortest path on the manifold, also known as the geodesic, can be computed given the curve length by equation (16).

When using a VAE as described above, the function which induces the metric is induced by the decoder which includes a mean and a variance term. Accordingly, the VAE generative process (e.g. the process performed by the VAE's decoder) of equation (7) can be written as a stochastic function

$$h_\phi(z) = \mu_\phi(z) + \text{diag}(\epsilon)\sigma_\phi(z), \quad \epsilon \sim \mathcal{N}(\mathbf{0}, \mathbb{I}_D)$$

$$(18)$$

where $\mu_\phi(z)$ and $\sigma_\phi(z)$ are the decoder mean neural network and the decoder variance neural network, respectively. Also, diag($\cdot$) is a diagonal matrix, and $\mathbb{I}_D$ is a $D \times D$ identity matrix. The above formulation is referred to as the reparameterization trick, which can be interpreted as samples generated out of a random projection of a manifold jointly spanned by $\mu_\phi$ and $\sigma_\phi$. Riemannian manifolds may arise from mapping functions between two spaces as in equation (14). As a result, equation 9 may be seen as a stochastic version of the mapping function of equation (14), which in turn defines a Riemannian manifold. With equation (18), a stochastic form of the Riemannian metric of equation (17) may be given. To do so, the stochastic function equation (18) is written as follows

$$h_\phi(z) = \left(\mathbb{I}_D, \quad \text{diag}(\epsilon)\right) \begin{pmatrix} \mu_\phi(z) \\ \sigma_\phi(z) \end{pmatrix} = P\, g(z)$$

$$(19)$$

where $P$ is a random matrix, and $g(z)$ is the concatenation of $\mu_\phi(z)$ and $\sigma_\phi(z)$. Therefore, the VAE can be seen as a random projection of a deterministic manifold spanned by g. Given that this stochastic mapping function is defined by a combination of mean $\mu_\phi(z)$ and variance $\sigma_\phi(z)$, the metric is likewise based on a mixture of both as follows,

$$M(z) = J_{\mu_\phi}(z)^\mathsf{T} J_{\mu_\phi}(z) + J_{\sigma_\phi}(z)^\mathsf{T} J_{\sigma_\phi}(z)$$

$$(20)$$

where
$J_{\mu_\phi}(z)$, $J_{\sigma_\phi}(z)$, $J_{\mu_\phi}(z)^\mathsf{T}$ and $J_{\sigma_\phi}(z)^\mathsf{T}$ are respectively the Jacobian of $\mu_\phi(z)$ and $\sigma_\phi(z)$ and their corresponding transpose evaluated at $z \in \mathcal{Z}$, with $\mathcal{Z}$ being the VAE low-dimensional latent space

The induced metric according to equation (20) allows modulating a vector field representing the dynamics learned from demonstrations in such a way that, if it is mapped back to ambient space $\mathcal{X}$ and is used for robot control (by following the resulting ambient space vector field for robot control), unknown regions, i.e. states which are not covered in the demonstrations, are avoided. For also avoiding obstacles in such a way, the following induced metric may be used:

$$M(z) = J_{\mu_\phi}(z)^\mathsf{T} M_\mathcal{X}(z) J_{\mu_\phi}(z) \\ + J_{\sigma_\phi}(z)^\mathsf{T} M_\mathcal{X}(z) J_{\sigma_\phi}(z)$$

$$(21)$$

where $M_\mathcal{X}$ represents a metric of the ambient space which is constructed in a way that the volume of the metric increases when approaching an obstacle.

The induced Riemannian metric characterizes both the data manifold in the latent space (since it is given by the VAE decoder's Jacobian) and obstacle information (when accounting for ambient space metrics). Specifically, the volume of the induced Riemannian metric increases when moving away from the data manifold and when approaching an obstacle. Consequently, the modulation for obstacle avoidance may be formulated in such a way that, in addition to performing obstacle avoidance, it ensures that the robot remains within the data manifold. This can be achieved by letting a Riemannian modulation matrix $G(x)$ reshape directly the vector field f to produce an "obstacle-free" vector field $\hat{f}$

$$\hat{f}(x) = G(x) f(x)$$

$$(22)$$

wherein the $f(x)$ corresponds to the one of equation (4).

It should be noted that according to various embodiments, the modulation happens in the latent field, i.e. the state $x$ in the following refers to a latent state.

The vector field resulting from the modulation $\hat{f}$ may then be mapped ("decoded") to the ambient space according to equation (11).

On the basis of equation (12), there are two primary elements that make up $G(x)$: the basis matrix $E$ determines the direction in which the vector field is modulated, and the matrix $D$ defines the extent of the vector field's deformation at state $x$. The matrix $E$ is defined by stacking the obstacle norm $n$ (i.e., a vector orthogonal to the tangent plane of the obstacle surface, pointing outward) and an orthogonal basis vectors $e$ that defines a hyperplane tangential to the surface of the obstacle. In a two-dimensional space, the matrix $E$ is formulated as

$$E = \begin{bmatrix} n_0 & e_0 \\ n_1 & e_1 \end{bmatrix} \tag{23}$$

To calculate the obstacle norm $n$, it is usually necessary to know both the obstacle's position and its shape. However, the need for explicit information about the obstacle in the modulation matrix can be eliminated as follows. Given a scalar-field $\mathcal{S}$ (i.e. distance field) that implicitly encodes the information about an obstacle the normal vector can be computed as

$$n(x) = \nabla \mathcal{S}(x) \quad s.t. \quad e(x) \perp n(x) \tag{24}$$

where $\nabla \mathcal{S}(x)$ is the gradient of the scalar field at $x$. Further, the matrix $D$ is designed in a way that (a) guarantees impenetrability and (b) ensures the local effect of the modulation matrix, i.e. $D$ becomes an identity matrix when going away from the obstacle. To fulfil these requirements (a) and (b), matrix $D$ is for example designed according to the following sigmoid function

$$\sigma(\rho, \nu, \lambda_{init}, \lambda_{end}, k) = \lambda_{init} + \frac{\lambda_{end} - \lambda_{init}}{1 + \exp\left(-k\left[\mathcal{S}(x) - \frac{(\rho + \nu)}{2}\right]\right)} \tag{25}$$

with

$\lambda_n(x) = \sigma(\rho = 1, \nu = 10, \lambda_{init} = 0, \lambda_{end} = 1, k = 2)$,
$\lambda_\tau(x) = \sigma(\rho = 1, \nu = 10, \lambda_{init} = 2, \lambda_{end} = 1, k = 2)$,

as follows

$$D(x) = \begin{bmatrix} \lambda_n(x) & 0 & \cdots & 0 \\ 0 & \lambda_\tau(x) & \cdots & 0 \\ \vdots & \vdots & \ddots & \vdots \\ 0 & 0 & \cdots & \lambda_\tau(x) \end{bmatrix} \tag{26}$$

The parameters of equations (25) and (26) are defined as follows: $\rho$ specifies the distance at which the obstacle becomes impenetrable, while $\nu$ indicates the distance from which the modulation is inactive. The initial and final values of the sigmoid function $\sigma(...)$ are given by $\lambda_{init}$ and $\lambda_{end}$, respectively.

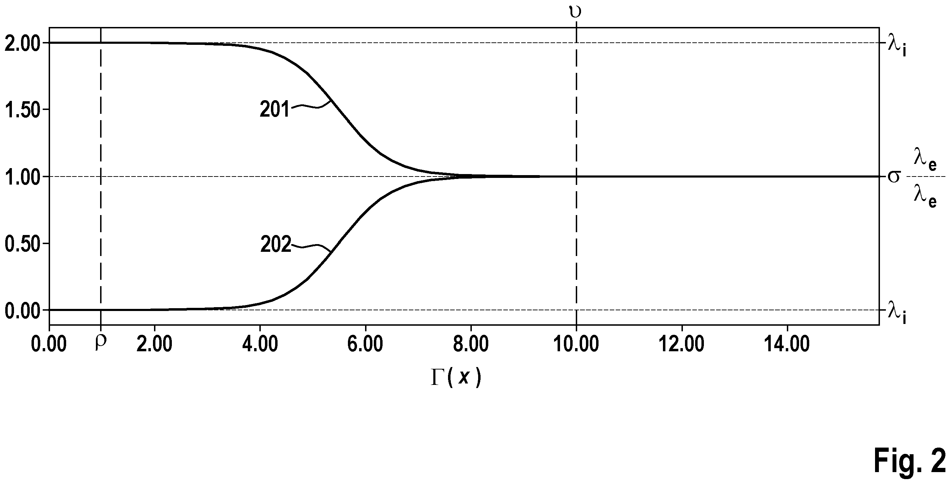

Figure 2 illustrates how the elements of matrix $D$ behave as a function of the distance from the obstacle.

The upper curve 201 gives the value of $\lambda_n$ depending on the distance and the lower curve 202 gives the value of $\lambda_\tau$ depending on the distance.

$\lambda_{init}$ (denoted as $\lambda_i$ in figure 2; it is 2 for $\lambda_n$ and -2 for $\lambda_\tau$) is the initial value and $\lambda_{end}$ (denoted as $\lambda_e$ in figure 2; it is 0 for both $\lambda_n$ and $\lambda_\tau$) is the target value for $\lambda_n$ and $\lambda_\tau$. This means that $\lambda_\tau$ takes the value of $\lambda_{init}$ when inside the obstacle and similarly it takes the values of $\lambda_{end}$ when outside of the obstacle. The same applies for $\lambda_n$. Lastly, $k$ controls the smoothness of the transition between these values.

The modulation activates $\nu$ units away from the obstacle surface and progressively intensifies until it reaches $\rho$ unit from the surface, at which point the surface becomes impenetrable. These values can be adjusted to suit different configurations or experimental conditions. It should be noted that the values of $\lambda_n(x)$ begin to decrease towards 0.0, while $\lambda_t(x)$ values start increasing towards 2.0 as the distance drops below $\nu$ units. This indicates that as the distance to the obstacle's surface decreases, the influence from matrix **E** becomes pronounced, leading to a local deflection away from the obstacle's surface.

For the normal vector **n,** as mentioned above, a scalar field $\mathcal{S}$ is defined that represents the unsafe regions of the environment, allowing using its gradient to define the normal vector **n,** as formulated in equation (22). In the present use case, the scalar field $\mathcal{S}$ can be defined as a weighted inverse of the magnification factor (i.e., the volume of the Riemannian metric) of the Riemannian metric **M** in equation (19) as follows

$$\mathcal{S}(\boldsymbol{x}) = \alpha \times \frac{1}{\mathcal{V}(\boldsymbol{x})} \tag{27}$$

$$\mathcal{V}(\boldsymbol{x}) = \sqrt{|\det(M(\boldsymbol{x}))|} \tag{28}$$

where the parameter $\alpha$ acts as a (scalar) scaling factor to accurately assign obstacle regions within the distance range of $[\rho, v]$, for their consideration in matrix **D.** According to various embodiments, a process to determine the parameter $\alpha$ begins by discretizing the data manifold with an equidistant mesh grid in the latent space, followed by calculating the corresponding volumes.

Subsequently, the maximum volume $\mathcal{V}_{\max}$ and the minimum volume $\mathcal{V}_{\min}$ are approximated from this grid and utilized to normalize the volumes $\mathcal{V}(x)$.

Thus, the volume can be normalized as follows

$$\mathcal{V}(\boldsymbol{x}) = \frac{\mathcal{V}(\boldsymbol{x}) - \mathcal{V}_{\min}}{\mathcal{V}_{\max} - \mathcal{V}_{\min}} \tag{29}$$

Afterward, $\alpha$ is experimentally chosen to align with the specified distance range explicitly defined by $\rho$ and $v$ in equation (25). This ensures that the scalar field is scaled appropriately: within the obstacles, scalar values are less than $\rho$, while far away from the obstacle region, the scalar values are higher than $v$.

While the modulation described in equation (12) is capable of altering the vector field to avoid convex obstacles, it might however generate unintended attractors in areas where the obstacle's shape forms a concave surface.

To evade this problem, a secondary tangential vector field can be used that activates only when the velocity is zero to avoid producing spurious attractors. This vector field can be formulated as

$$\hat{f} = \boldsymbol{G}(\boldsymbol{x}) \cdot f(\boldsymbol{x}) + \beta(\boldsymbol{x})\boldsymbol{G}(\boldsymbol{x}) \cdot g(\boldsymbol{x}), \quad \beta \in [0, 1] \tag{30}$$

where parameter $\beta$ increases as the velocity generated by the main modulation approaches zero. This tangential vector field can be constructed using the tangent vector on the surface of the obstacle. Given the presence of alternative tangent vector fields (e.g. alternative paths around an obstacle), the one that results in a more optimal vector field after modulation may be selected. For instance, in a two-dimensional space, there are two different tangent vector fields to choose from. The criteria for selecting a tangent vector field depend on the specific use case.

It should be noted that the modulation of equation (30) happens in the latent space.

In this context, the geometry of the underlying data manifold may be taken into account by computing the geodesic connecting the current state **x** to the target **x***. The geodesic can be computed by minimizing the curve length, as formulated in equation (16), and using it as a reference direction for the tangent vector field. The geodesic is for example calculated by the controller when it needs to decide which tangential vector field should be chosen since there are multiple.

The geodesic indicates which one is better (for example which side of the obstacle the robot device should go that we will have a shorter path to the target). This geodesic computation is just a potential solution for the problem of choosing what the best path is. In this case, the best path is given by the velocity vector that takes the robot device along the shortest path to a given target.

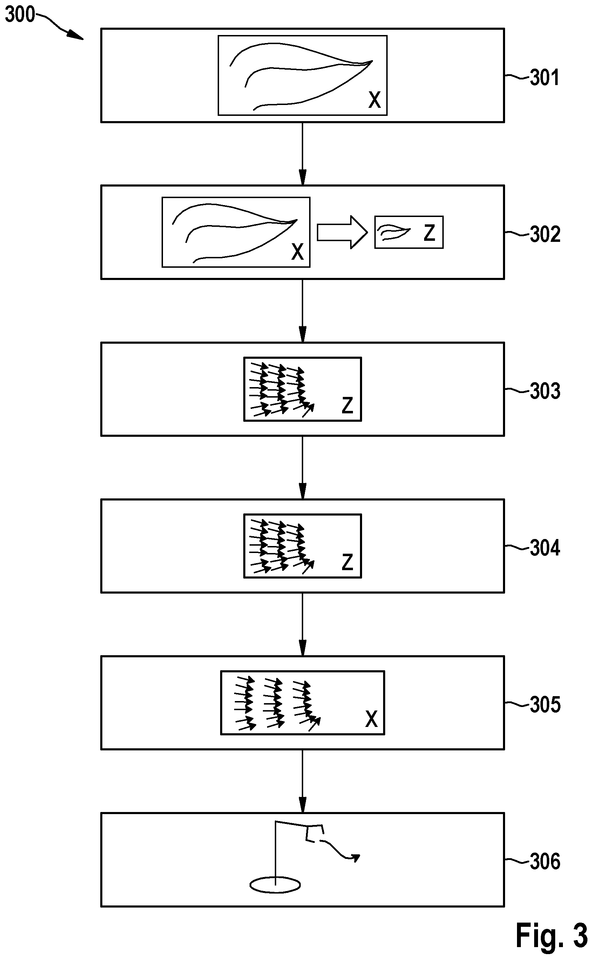

In summary, according to various embodiments, a method for controlling a robot device is described as illustrated in figure 3.

Figure 3 shows a flow diagram 300 illustrating a method for controlling a robot device according to an embodiment.

In 301, providing demonstrations for movements of the robot device are provided, wherein each demonstration demonstrates dynamics of the robot device by indicating a sequence of states of the robot device in an ambient space.

In 302, states of the robot device which the robot device traverses in the demonstrations are encoded to encoded states in a latent space (i.e. a space of encodings) by an encoding function which maps states from the ambient space to the latent space.

In 303, a vector field in the latent space representing the demonstrated dynamics is determined (by determining the vector field to fit the encoded states, i.e. to reflect the trajectories in the latent space given by the demonstrations which have been mapped to latent space by mapping the states which are traversed in the demonstrations to the latent space).

In 304, a reshaped vector field is generated by reshaping the vector field in the latent space by

- determining a volume function in the latent space which specifies the volume according to a pullback metric according to a decoding function inverse to the encoding function (i.e. as given by equation (17) with *h* corresponding to the decoding function) of a predetermined metric in the ambient space (i.e., in other words, the latent space inherits the metric of the ambient space via the decoding function and this inherited metric is denoted as pullback metric) and
- locally reshaping or modifying the vector field in regions (of the latent space) where the volume of the pullback metric (i.e. volume according to the pullback metric, as specified by the volume function) increases (e.g. amplifying the vector field in directions of decreasing volume at least in some parts of the latent space), for example near obstacles and/or when leaving regions of the latent space containing the encoded states.

In 305, a vector field in the ambient space is generated by mapping the reshaped vector field to ambient space according to the decoding function (i.e. multiplying with the Jacobian of the decoding function).

In 306, the robot device is configured to follow the generated vector field in ambient space (and thus to operate according to the dynamics learned from the demonstrations).

According to various embodiments, in other words, an encoder and decoder pair (e.g. of a VAE) are used to learn a skill-specific Riemannian manifold (referred to as "(latent) data manifold") from human demonstrations of the skill. According to various embodiments, an approach for modulating a vector field representing a (stable) dynamical system to avoid obstacles and uncertain regions while maintaining stability by leveraging the underlying Riemannian manifold learned from the data (i.e. the demonstrations) is provided.

Riemannian manifolds in geodesic motion skills do not only outline the regions of uncertainty outside a data manifold but also offer a low-dimensional implicit representation of obstacles through ambient space metrics. According to various embodiments, the learned Riemannian manifolds is used as a stochastic implicit representation of robot motion safety boundaries and obstacles using pull-back and ambient metrics. Specifically, the learned Riemannian manifold is used to give a scalar field that implicitly identifies unsafe regions, thus defining areas that should be avoided, including both out-of-support regions and obstacle areas. This scalar field is used to modulate the vector field (also in the latent space) representing the dynamics learned from the demonstrations. Thus, by applying matrix modulation with learned Riemannian manifolds, gives the respective robot device the ability to navigate complex environments efficiently.

For this, according to various embodiments, a direct connection between implicit obstacle representation and Riemannian manifolds learned from data is used. Leveraging this to learn robot motion skills via geodesics provides energy-minimizing paths on these learned latent data manifolds. These manifolds provide a representation of uncertain regions of the latent space - those outside of the data manifold - as well as a low-dimensional implicit representation of obstacles through ambient space metrics. The learned Riemannian manifolds may thus be seen as a stochastic implicit representation of the boundaries of robot motion skills and/or obstacles described by an ambient metric. Specifically, the learned Riemannian manifold can be conceptualized as a scalar field that implicitly represents obstacle regions, thereby describing the areas that should be avoided, including both outside-data-support (i.e. regions in the latent space outside of the data manifold) and obstacle regions.

The approach of figure 3 can be used to learn a control policy (from demonstrations) and then compute a control signal for controlling a technical system, like e.g. a computer-controlled machine, like a robot, a vehicle, a domestic appliance, a power tool, a manufacturing machine, a personal assistant or an access control system. According to various embodiments, a policy for controlling the technical system may be learnt and then the technical system may be operated accordingly.

Various embodiments may receive and use image data (i.e. digital images) from various visual sensors (cameras) such as video, radar, LiDAR, ultrasonic, thermal imaging, motion, sonar etc., e.g. to determine the one or more parameter values specifying the activity.

The method of Figure 3 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

**Claims**

1.   A method for controlling a robot device (101), comprising:

> providing (301) demonstrations for movements of the robot device (101),
> wherein each demonstration demonstrates dynamics of the robot device (101) by indicating a sequence of states of the robot device (101) in an ambient space;
> encoding (302) states of the robot device (101) which the robot device (101) traverses in the demonstrations to encoded states in a latent space by an encoding function which maps states from the ambient space to the latent space;
> determining (303) a vector field in the latent space representing the demonstrated dynamics;
> generating (304) a reshaped vector field by reshaping the vector field in the latent space by
>
> > ∘ determining a volume function in the latent space which specifies the volume according to a pullback metric according to a decoding function inverse to the encoding function of a predetermined metric in the ambient space and
> > ∘ locally reshaping or modifying the vector field in regions where the volume of the pullback metric increases;
>
> generating a vector field in the ambient space (305) by mapping the reshaped vector field to ambient space according to the decoding function; and
> controlling (306) the robot device (101) to follow the generated vector field in ambient space.

2.   The method of claim 1, comprising determining the metric in the ambient space such that distances decrease when approaching an obstacle.

3.   The method of claim 1 or 2, wherein the decoding function includes an uncertainty term increasing when leaving a region of the latent space containing the encoded states.

4.   The method of any one of claims 1 to 3, comprising attenuating the vector field in directions perpendicular to directions of increasing volume at least in some parts of the latent space.

5.   The method of any one of claims 1 to 4, comprising attenuating the vector field by determining the gradient of a scalar vector field, wherein the scalar field is, for a given scaling factor, at each point of the latent space given by the inverse of the volume according to the pullback metric at the point times the scaling factor and attenuating vector field in directions of the gradient of the scalar field.

6.   The method of any one of claims 1 to 5, comprising amplifying the vector field in directions of decreasing volume according to an amplification factor which monotonically decreases with increasing distance to an obstacle.

7.   The method of any one of claims 1 to 6, wherein the encoding function is an encoder of a variational autoencoder and the decoding function is a decoder of the variational autoencoder.

8.   The method of any one of claims 1 to 7, comprising determining the vector field in the latent space representing the demonstrated dynamics by learning the Jacobian of a function representing the demonstrated dynamics by training a neural network to output, in response to input of an encoded state, a representation of a semi-definite matrix, which, when regularized to give a definite matrix approximates the Jacobian of the function representing the demonstrated dynamics and, for determining a velocity vector from the vector field at an encoded state, integrating the Jacobian along a line from a reference point in the latent space to the encoded state.

9. A controller (106), configured to perform a method of any one of claims 1 to 8.

10. A computer program comprising instructions which, when executed by a computer, makes the computer perform a method according to any one of claims 1 to 8.

11. A computer-readable medium comprising instructions which, when executed by a computer, makes the computer perform a method according to any one of claims 1 to 8.

**Amended claims in accordance with Rule 137(2) EPC.**

1. A method for controlling a robot device (101), comprising:

providing (301) demonstrations for movements of the robot device (101), wherein each demonstration demonstrates dynamics of the robot device (101) by indicating a sequence of states of the robot device (101) in an ambient space;
encoding (302) states of the robot device (101) which the robot device (101) traverses in the demonstrations to encoded states in a latent space by an encoding function which maps states from the ambient space to the latent space, wherein the encoding function is an encoder of a variational autoencoder;
determining (303) a vector field in the latent space representing the demonstrated dynamics to reflect the trajectories in the latent space given by the demonstrations which have been mapped to latent space by mapping the states which are traversed in the demonstrations to the latent space;
generating (304) a reshaped vector field by reshaping the vector field in the latent space by

∘ determining a volume function in the latent space which specifies a volume according to a pullback metric according to a decoding function inverse to the encoding function of a predetermined metric in the ambient space, wherein the decoding function is a decoder of the variational autoencoder and wherein the volume function is given by the square root of the absolute value of the determinant of the pullback metric and wherein the pullback metric is the metric inherited from the ambient space via the decoding function;
∘ locally reshaping or modifying the vector field in regions where the volume of the pullback metric increases by multiplying the vector field by a modulation matrix;

generating a vector field in the ambient space (305) by mapping the reshaped vector field to ambient space according to the decoding function; and
controlling (306) the robot device (101) to follow the generated vector field in ambient space.

2. The method of claim 1, wherein the decoding function includes an uncertainty term increasing when leaving a region of the latent space containing the encoded states.

3. The method of claim 1 or 2, comprising attenuating the vector field in directions perpendicular to directions of increasing volume at least in some parts of the latent space.

4. The method of any one of claims 1 to 3, comprising attenuating the vector field by determining the gradient of a scalar vector field, wherein the scalar field is, for a given scaling factor, at each point of the latent space given by the inverse of the volume according to the pullback metric at the point times the scaling factor and attenuating vector field in directions of the gradient of the scalar field.

5. The method of any one of claims 1 to 4, comprising amplifying the vector field in directions of decreasing volume according to an amplification factor which monotonically decreases with increasing distance to an obstacle.

6. The method of any one of claims 1 to 5, comprising determining the vector field in the latent space representing the demonstrated dynamics by learning the Jacobian of the vector field representing the demonstrated dynamics by training a neural network to output, in response to input of an encoded state, a representation of a semi-definite matrix, which, when regularized to give a definite matrix approximates the Jacobian of the vector field representing the demonstrated dynamics and, for determining a velocity vector from the vector field at an encoded state, integrating the Jacobian along a line from a reference point in the latent space to the encoded state.

7. A controller (106), configured to perform a method of any one of claims 1 to 6.

8. A computer program comprising instructions which, when executed by a computer, makes the computer perform a method according to any one of claims 1 to 6.

9. A computer-readable medium comprising instructions which, when executed by a computer, makes the computer perform a method according to any one of claims 1 to 6.

Fig. 1

Fig. 2

EP 4 714 614 A1

Fig. 3

**EUROPEAN SEARCH REPORT**

Européisches
Patentamt
European
Patent Office
Office européen
des brevets

Application Number

EP 24 20 1330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Beik-Mohammadi Hadi ET AL: "NEURAL CONTRACTIVE DYNAMICAL SYSTEMS", , 17 January 2024 (2024-01-17), XP093237953, Retrieved from the Internet: URL:https://arxiv.org/pdf/2401.09352 * page 2 - page 9 * * page 14 - page 16 * ----- | 1-11 | INV. B25J9/16 |
| Y | BEIK-MOHAMMADI HADI ET AL: "Reactive motion generation on learned Riemannian manifolds", THE INTERNATIONAL JOURNAL OF ROBOTICS RESEARCH, vol. 42, no. 10, 28 August 2023 (2023-08-28), pages 729-754, XP093256501, Sage ISSN: 0278-3649, DOI: 10.1177/02783649231193046 Retrieved from the Internet: URL:https://journals.sagepub.com/doi/full-xml/10.1177/02783649231193046> * page 730 - page 742 * * page 750 - page 752 * ----- | 1-11 | |
| A | HOLGER KLEIN ET AL: "On the Design of Region-Avoiding Metrics for Collision-Safe Motion Generation on Riemannian Manifolds", ARXIV.ORG, CORNELL UNIVERSITY LIBRARY, 201 OLIN LIBRARY CORNELL UNIVERSITY ITHACA, NY 14853, 28 July 2023 (2023-07-28), XP091576586, * the whole document * ----- -/-- | 1-11 | |

TECHNICAL FIELDS
SEARCHED     (IPC)

B25J

The present search report has been drawn up for all claims

| Place of search | Date of completion of the search | Examiner |
|---|---|---|
| The Hague | 6 March 2025 | De Santis, Agostino |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

page 1 of 2

Europäisches
Patentamt

European
Patent Office

Office européen
des brevets

**EUROPEAN SEARCH REPORT**

**Application Number**

**EP 24 20 1330**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEAN JAFFE ET AL: "Learning Neural Contracting Dynamics: Extended Linearization and Global Guarantees", ARXIV.ORG, CORNELL UNIVERSITY LIBRARY, 201 OLIN LIBRARY CORNELL UNIVERSITY ITHACA, NY 14853, 29 May 2024 (2024-05-29), XP091770667, * the whole document * | 1-11 | |

-----

|  |  |  | TECHNICAL FIELDS SEARCHED (IPC) |
|---|---|---|---|

The present search report has been drawn up for all claims

| Place of search | Date of completion of the search | Examiner |
|---|---|---|
| The Hague | 6 March 2025 | De Santis, Agostino |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)